# EUROPÄISCHE PATENTSCHRIFT

(11) **EP 2 437 541 B1**
(45) Veröffentlichungstag und Bekanntmachung des Hinweises auf die Patenterteilung: **20.09.2017**
(21) Anmeldenummer: 11182313.4
(22) Anmeldetag: 22.09.2011
(51) Int. Cl.: H04W 24/08

(54) **Ermittlung der Dienstgüte in einem Kommunikationsendgerät**
Determination of the quality of service in a communication transmission device
Détermination des biens de service dans un terminal de communication

(30) Priorität: 01.10.2010 DE 102010041877
(43) Veröffentlichungstag der Anmeldung: 04.04.2012
(73) Patentinhaber: Vodafone Holding GmbH, 40213 Düsseldorf (DE)
(72) Erfinder: Rodermund, Friedhelm, 56077 Koblenz (DE)
(74) Vertreter: Jostarndt Patentanwalts-AG

(56) Entgegenhaltungen:
- DE-A1- 10 356 256
- US-A1- 2004 071 095
- US-A1- 2007 263 775

## Beschreibung

Die Erfindung befasst sich mit der Überwachung einer Dienstgüte in einem mobilen Endgerät. Insbesondere betrifft die Erfindung ein Verfahren zum Ermitteln einer Dienstgüte eines Dienstes sowie ein Kommunikationsendgerät mit einer Einrichtung zur Erfassung von eine Dienstgüte repräsentierenden Parametern.

Kommunikationsnetze, wie beispielsweise Mobilfunknetze, stellen eine Vielzahl von Diensten zur Übertragung von Sprache, Multimediadaten und Nachrichten bzw. Mitteilungen an die mit dem Netzwerk verbundenen Kommunikationsendgeräte bereit. Aus Sicht der Nutzer bestehen für die Dienste bestimmte Anforderungen, etwa im Hinblick auf die Geschwindigkeit und Zuverlässigkeit bzw. Verfügbarkeit der Dienste. Die Anforderungen bzw. das Maß, in dem sie erfüllt werden, wird auch als Dienstgüte (Quality of Service - QoS) bezeichnet. Eine Quantifizierung der Dienstgüte kann anhand von Dienstgüteparametern (QoS-Parametern) vorgenommen werden. Für GSM (Global System for Mobile Communications)- und 3G-Mobilfunknetze sind solche QoS-Parameter beispielsweise in dem Dokument TS 102 250, des European Telecommunications Standards Institute (ETSI) beschrieben, insbesondere in dessen zweitem Teil (TS 102 250-2).

Um zu gewährleisten, dass in einem Kommunikationsnetz eine bestimmte Dienstgüte bereitgestellt wird, kann eine Überwachung der Dienstgüte vorgenommen werden. Hierzu können QoS-Parameter an verschiedenen Messpunkten innerhalb des Kommunikationsnetzes erfasst und von dem Netzbetreiber ausgewertet werden. Die Auswertung kann beispielsweise bei der Netzwerkoptimierung genutzt werden. Die Messpunkte können sich in dem Kommunikationsnetz innerhalb der darin enthaltenen Netzwerknoten befinden. Ferner können Messungen von QoS-Parametern in den Kommunikationsendgeräten vorgenommen werden, die mit dem Kommunikationsnetz verbunden sind. Dies erlaubt eine Erfassung der Dienstgüte aus Sicht der Nutzer der Dienste, d.h. dort, wo die Dienste genutzt werden.

Zur Dienstgüteerfassung kann eine Vielzahl von QoS-Parametern in Bezug auf die Leistung von Diensten und die Leistung des Kommunikationsnetzes erfasst werden. In einem Kommunikationsendgerät können zu diesem Zweck eine oder mehrere Softwareapplikationen eingesetzt werden, welche die QoS-Parameter erfassen, während mittels der Endgeräte auf die betreffenden Dienste zugegriffen wird. Die erfassten Werte der QoS-Parameter können von den Kommunikationsendgeräten zur Auswertung an entsprechende Einrichtungen des Kommunikationsnetzes gesendet werden. Die Auswertung der Dienstgüte und der Dienstgüte beeinflussenden Faktoren kann dabei durch eine höhere Anzahl von erfassten QoS-Parametern verbessert werden. Mit der Anzahl der zu messenden QoS-Parameter steigen jedoch auch der Messaufwand und die hiermit verbundene Auslastung der Kommunikationsendgeräte durch die Messungen.

Insbesondere in mobilen Kommunikationsendgeräten, die in der Regel nur über eingeschränkte Ressourcen, insbesondere Rechenkapazität und Speicherplatz, verfügen, führt die Erfassung einer hohen Anzahl von QoS-Parametern in der Regel zu einer verminderten Leistung, die zur Ausführung der Dienste und sonstiger Aufgaben zur Verfügung steht. Daher werden die QoS-Messungen in den Kommunikationsendgeräten üblicherweise auf wenige QoS-Parameter beschränkt. Dabei muss in Kauf genommen werden, dass weniger QoS-Parameter für die Auswertung vorliegen.

Die US 2004/0071095 A1 offenbart ein Verfahren und eine Vorrichtung zum Überwachen der Übertragung von Daten in einem Kommunikationsnetz. Das Verfahren umfasst die Schritte der Übertragung eines Stroms von Datenpaketen von einem ersten Knoten zu einem zweiten Knoten in dem Kommunikationsnetz, in einem ersten Betriebsmodus, Messen mit einem ersten Genauigkeitsniveau zumindest eines ersten Parameters des übertragenen Datenstrom, und in Reaktion darauf, dass der gemessene erste Parameter einen vorbestimmten Wert erreicht, Messung mindestens eines Parameters des übertragenen Datenstrom in einem zweiten Betriebsmodus, der eine höhere Genauigkeit als die erste Genauigkeit aufweist.

Die DE 103 56 256 A 1 offenbart ein Verfahren, in dem ein oder mehrere erste Messwerte mindestens eines ersten Qualitätsparameters einer Funkschnittstelle zu einem ersten Messzeitpunkt durch eine oder mehrere erste Messeinheiten gemessen werden. Ein oder mehrere zweite Messwerte mindestens eines zweiten Qualitätsparameters der Funkschnittstelle werden, ausgehend vom ersten Messzeitpunkt, innerhalb mindestens eines zurückliegenden Messzeitfensters durch eine oder mehrere zweite Messeinheiten gemessen. Mindestens ein erster Messwert des ersten Qualitätsparameters und mindestens ein zweiter Messwert des zweiten Qualitätsparameters werden durch eine Auswerteeinheit analysiert und aus dem Analyseergebnis wird mindestens ein Überwachungskriterium für die Qualität der Funkschnittstelle (FS) generiert.

Die US2007/0263775 A offenbart ein verteiltes System und Verfahren zur Diagnose von Fehlern in einem Signal an einem Endpunkt in einem Netzwerk.

Es ist eine Aufgabe der vorliegenden Erfindung, die in einem Kommunikationsendgerät zur Erfassung von QoS-Parametern eingesetzten Ressourcen zu verringern.

Die Aufgabe wird gelöst durch ein Verfahren nach dem Patentanspruch 1 und durch ein Kommunikationsendgerät nach dem Patentanspruch 13. Ausgestaltungen des Verfahrens und des Kommunikationsendgeräts sind in den abhängigen Ansprüche angegeben.

Gemäß einem ersten Aspekt schlägt die Erfindung ein Verfahren zum Ermitteln einer Dienstgüte einer Dienstgüte wenigstens eines Dienstes vor, wobei mehrere die Dienstgüte repräsentierende Parameter in einem Kommunikationsendgerät erfasst werden. Bei dem Verfahren wird wenigstens einem ersten Parameter aus einer ersten Schicht wenigstens ein zweiter Parameter aus einer zweiten Schicht zugeordnet, wobei die erste Schicht einer höheren Schicht zugehörig ist und einen Bezug zur Bereitstellung von Diensten, auf die der Nutzer des Endgeräts zugreift, aufweist, wobei die zweite Schicht einer niedrigeren Schicht zugehörig ist und sich auf die Datenübertragung zwischen dem Endgerät und dem Kommunikationsnetz bezieht. Die Erfassung des zweiten Parameters wird in Abhängigkeit von einem Ergebnis eines Vergleichs des ersten Parameters mit einem vorgegebenen Schwellenwert begonnen. Die Erfassung des zweiten Parameters kann zudem in Abhängigkeit von einem Ergebnis eines Vergleichs des ersten Parameters mit einem zweiten Schwellenwert beendet werden.

Der wenigstens erste Parameter ist vorzugsweise ein Maß für die Geschwindigkeit oder Qualität ist, mit der auf die Dienste zugegriffen werden kann oder mit der Informationen an dem Endgerät ausgegeben werden können.

Gemäß einem zweiten Aspekt der Erfindung wird ein Kommunikationsendgerät mit einer Einrichtung zum Erfassen von mehreren eine Dienstgüte repräsentierenden Parametern bereitgestellt. In dem Endgerät ist eine Zuordnung zwischen einem ersten Parameter aus einer ersten Schicht wenigstens ein zweiter Parameter aus einer zweiten Schicht hinterlegt, wobei die erste Schicht einer höheren Schicht zugehörig ist und einen Bezug zur Bereitstellung von Diensten, auf die der Nutzer des Endgeräts zugreift, aufweist, wobei die zweite Schicht einer niedrigeren Schicht zugehörig ist und sich auf die Datenübertragung zwischen dem Endgerät und dem Kommunikationsnetz bezieht. Die Einrichtung zur Erfassung der die Dienstgüte repräsentierenden Parameter ist dazu ausgestaltet, die Erfassung des zweiten Parameters in Abhängigkeit von einem Ergebnis eines Vergleichs des ersten Parameters mit einem vorgegebenen Schwellenwert zu starten.

Durch den Start der Erfassung des zweiten Parameters in Abhängigkeit von dem Ergebnis des Vergleichs des ersten Parameters mit dem Schwellenwert wird die Möglichkeit eröffnet, dass im normalen Betrieb des Endgeräts nicht alle relevanten, die Dienstgüte repräsentierenden Parameter erfasst werden müssen. Die Erfassung kann im Normalbetrieb auf den ersten Parameter beschränkt werden, während der zweite Parameter nur in speziellen Situationen erfasst wird, die anhand des Vergleichs ermittelt werden. Hierdurch werden die Ressourcen verringert, die insgesamt zur Erfassung von QoS-Parametern eingesetzt werden. Insbesondere im Normalbetrieb kann die Auslastung von Ressourcen durch die Erfassung von QoS-Parametern verringert werden.

In einer Ausgestaltung des Verfahrens und des Kommunikationsendgeräts ist vorgesehen, dass die Erfassung des zweiten Parameters begonnen wird, wenn anhand des Vergleichs festgestellt wird, dass der erste Parameter den Schwellenwert über- oder unterschritten hat. Vorzugsweise zeigt das Über- oder Unterschreiten des Stellenwerts eine Verschlechterung des ersten Parameters an. Somit wird in der Ausgestaltung erreicht, dass mit der Erfassung des zweiten Parameters (erst) begonnen wird, wenn der Wert des ersten Parameters eine Verschlechterung der Dienstgüte anzeigt oder wahrscheinlich macht.

In einer weiteren Ausgestaltung des Verfahrens und des Kommunikationsendgeräts wird mit der Erfassung des zweiten Parameters begonnen, wenn mehrere erste Parameter jeweils einen Schwellenwert über- oder unterschritten haben. Gegenüber der Erfassung des zweiten Parameters in Abhängigkeit von dem Ergebnis des Vergleichs eines einzigen ersten Parameters mit einem vorgegebenen Schwellenwert kann diese Ausgestaltung den Vorteil haben, dass durch die Werte der Mehrzahl von ersten Parametern eine spezifischere Indikation für eine Verschlechterung der Dienstgüte vorliegt, die eine Erfassung eines bestimmten zweiten Parameters oder bestimmter zweiter Parameter zweckmäßig macht. Damit kann die unnötige Erfassung von QoS-Parametern weiter reduziert werden.

Eine Variante des Verfahrens und des Kommunikationsendgeräts beinhaltet, dass wenigstens ein zweiter Parameter gewählt ist, der den ersten Parameter potentiell beeinflusst. Vorteilhaft kann in diesem Fall ermittelt werden, ob die Verschlechterung des ersten Parameters auf eine Ursache zurückzuführen ist, die anhand des zweiten Parameters ermittelt werden kann.

Eine weitere Variante des Verfahrens und des Kommunikationsendgeräts sieht vor, dass ein zweiter Parameter gewählt ist, der sich potentiell bei einer Veränderung des ersten Parameters ebenfalls verändert, ohne jedoch den ersten Parameter zu beeinflussen. Auf diese Weise kann ermittelt werden, ob die Verschlechterung des ersten Parameters mit einer Verschlechterung des zweiten Parameters einhergeht, bei dem es sich beispielsweise um einen verwandten Parameter handeln kann, der sich insbesondere auf denselben Dienst bezieht, wie der erste Parameter.

Die zuletzt genannte zweite Variante kann alternativ zu der ersten Variante vorgesehen sein. Beide Varianten können jedoch auch kombiniert werden. Insbesondere kann einer der zweiten Parameter so gewählt sein, dass er den ersten Parameter potentiell beeinflusst, und ein weiterer zweiter Parameter kann so gewählt werden, dass er sich bei einer Veränderung des ersten Parameters ebenfalls verändert, ohne den ersten Parameter zu beeinflussen.

Eine Ausgestaltung des Verfahrens und des Kommunikationsendgeräts sieht vor, dass der erste Parameter repräsentativ ist für eine Qualität einer Ausgabe von akustischen und/oder optischen Informationen an dem Kommunikationsendgerät. Hierdurch kann zuverlässig die Qualität bzw. Dienstgüte festgestellt werden, mit der Dienste an dem Kommunikationsendgerät für den Nutzer bereitgestellt werden.

Der zweite Parameter kann, vor allem in der zuvor genannten zweiten Variante, ebenfalls repräsentativ für die Ausgabequalität von akustischen und/oder optischen Informationen sein. In einer weiteren Ausgestaltung des Verfahrens und des Kommunikationsendgeräts ist der zweite Parameter repräsentativ für eine Datenübertragungsqualität zwischen dem Endgerät und einem Kommunikationsnetz. Insbesondere kann der zweite Parameter repräsentativ für eine Datenübertragungsgeschwindigkeit zwischen dem Endgerät und dem Kommunikationsnetz sein. QoS-Parameter, die sich auf die Qualität bzw. Geschwindigkeit der Datenübertragung beziehen, beeinflussen in der Regel die Qualität der Ausgabe von Informationen an dem Endgerät und können daher vor allem bei der zuvor genannten ersten Variante als zweite Parameter gewählt werden.

In einer weiteren Ausgestaltung des Verfahrens und des Kommunikationsendgeräts kann vorgesehen sein, dass der erste Parameter eine Wiedergabequalität eines Bild- oder Audiodatenstroms angibt. Insbesondere, wenn ein sogenannter Streaming-Dienst für die Wiedergabe eines solchen Datenstroms genutzt wird, bestehen für eine einwandfreie Wiedergabe in der Regel sehr hohe Anforderungen an die Qualität, vor allem die Geschwindigkeit, der Datenübertragung zwischen dem Endgerät und dem Kommunikationsnetz. Daher ist es zweckmäßig, im Falle einer Beeinträchtigung der Wiedergabequalität einen oder mehrere zweite Parameter zu erfassen, die für die Datenübertragungsgeschwindigkeit repräsentativ sind, um zu ermitteln, ob eine verringerte Datenübertragungsgeschwindigkeit eine Ursache für die Beeinträchtigung der Wiedergabequalität ist.

Darüber hinaus ist eine Ausgestaltung des Verfahrens und des Kommunikationsendgeräts dadurch gekennzeichnet, dass in dem Endgerät erfasste Werte des ersten und/oder zweiten Parameters über das Kommunikationsnetz an einen Netzwerkserver gesendet werden. Der Netzwerkserver kann etwa eine Protokollierung und/oder Auswertung der erhaltenen Parameter vornehmen. Die Ergebnisse der Auswertung können beispielsweise von dem Betreiber des Kommunikationsnetzes zur Netzwerkoptimierung genutzt werden.

Der Schwellenwert des ersten Parameters oder die Schwellenwerte der Mehrzahl von ersten Parametern sind vorzugsweise derart gewählt, dass eine im Wesentlichen unbeeinträchtigte Dienstgüte vorliegt, solange die Schwellenwerte nicht unter- oder überschritten sind. Daher ist die Übermittlung der erfassten Werte des ersten Parameters jedenfalls nicht zwingend erforderlich. Die Übermittlung kann begonnen werden, wenn eine Beeinträchtigung der Dienstgüte anhand eines Über- oder Unterschreitens des Schwellenwerts erkannt worden ist. Eine Ausgestaltung des Verfahrens und des Kommunikationsendgerät beinhaltet daher, dass die Übermittlung der erfassten Werte des ersten Parameters an den Netzwerkserver mit der Erfassung des zweiten Parameters begonnen wird.

Bei dem Kommunikationsendgerät kann es sich insbesondere um ein mobiles Kommunikationsendgerät handeln, und das Kommunikationsnetz kann als ein drahtloses Kommunikationsnetz, insbesondere als ein Mobilfunknetz, ausgestaltet sein. In derartigen Netzen wird die Güte von bereitgestellten Diensten in der Regel durch eine Vielzahl von Faktoren beeinflusst, die insbesondere in Bezug zu dem drahtlosen Zugang zu dem Kommunikationsnetz stehen. Daher ist die vorgesehene Erfassung von QoS-Parametern in solchen Netzen besonders zweckmäßig.

Die erfassten ersten und zweiten Parameter können sich auf einen einzigen Dienst beziehen, auf den mittels des Endgeräts zugegriffen wird, oder auf eine Mehrzahl von Diensten. Die Dienste können insbesondere über das Kommunikationsnetz bereitgestellt werden, mit dem das Endgerät verbunden werden kann. Die Dienste können einen oder mehrere Dienste umfassen aus der Gruppe beinhaltend Dienste zur Übertragung von Sprache und Mitteilungen bzw. Nachrichten sowie Audio- und/oder Video- bzw. Bilddaten enthaltenden Multimediadaten und weiteren Daten sowie Dienste zur Datenübertragung über das Kommunikationsnetz. Die Dienste können aufeinander aufsetzen, wie es beispielsweise bei einem Dienst zur Wiedergabe von Inhalten und einem zugrunde liegenden Übertragungsdienst der Fall sein kann, oder die Dienste können nebeneinander ausgeführt werden.

Gemäß einem weiteren Aspekt schlägt die Erfindung ein System vor, welches das Kommunikationsendgerät oder eine Ausführungsform oder Variante des Kommunikationsendgeräts enthält sowie einen Netzwerkserver, der dazu ausgestaltet ist, die von dem mobilen Endgerät gesendeten Werte zu empfangen.

Darüber hinaus schlägt die Erfindung gemäß einem weiteren Aspekt ein Computerprogramm vor, das einen Softwarecode mit Befehlen zur Ausführung des Verfahrens oder einer seiner Ausgestaltungen mittels eines Prozessors umfasst. Der Prozessor kann insbesondere in dem Kommunikationsendgerät enthalten sein.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figur beschrieben werden.

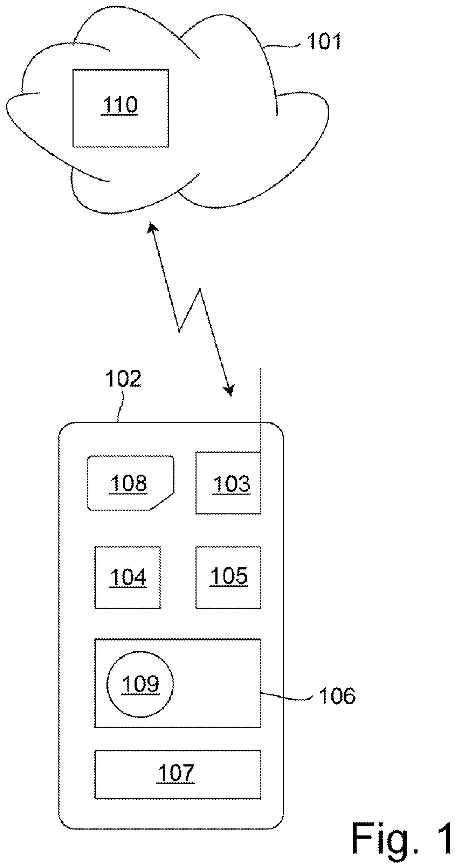

Dabei zeigt
- Fig. 1: eine schematische Darstellung eines Kommunikationsendgeräts, das mit einem Kommunikationsnetz verbunden und zur Erfassung von QoS-Parametern ausgestaltet ist.

Das in der Figur 1 schematisch dargestellte Kommunikationsnetz 101 stellt vorzugsweise eine Mehrzahl von Diensten zur Übertragung von Sprache und Mitteilungen bzw. Nachrichten sowie Audio- und/oder Video- bzw. Bilddaten enthaltenden Multimediadaten und weiteren Daten bereit, auf die mit Hilfe von Kommunikationsendgeräten 102 zugegriffen werden kann, die mit dem Kommunikationsnetz 101 verbunden werden.

Beispiele für Dienste, die in dem Kommunikationsnetz bereitgestellt werden können, sind Telefonie und Videotelefonie zur Übertragung von Sprache und Videodaten sowie SMS (Short Messaging Service), E-Mail, MMS (Multimedia Messaging Service) und IM (Instant Messaging) zur Übertragung von Mitteilungen bzw. Nachrichten. Beispiele für Dienste zur Übertragung von Multimedia- und weiteren Daten sind Streaming-Dienste zum Empfangen von Audio- und/oder Bilddatenströmen, Rundfunkempfang (Mobile Broadcast), Zugriff auf das Internet bzw. das Word Wide Web (Web Browsing) und Dienste für den Transfer von Dateien.

Das Kommunikationsnetz 101 ist in einer Ausgestaltung ein Netz, das ein Kernnetz umfasst sowie ein in der Figur nicht gezeigtes drahtloses Zugangsnetz, über das Endgeräte 102 per Funk mit dem Kernnetz verbunden werden können. Das Kommunikationsnetz ermöglicht eine Datenübertragung von und zu den angeschlossenen Kommunikationsendgeräten 102 über leitungsvermittelnde und/oder paketvermittelnde Verbindungen. Insbesondere kann es sich bei dem Kommunikationsnetz 101 um ein Mobilfunknetz handeln, welches beispielsweise nach dem GSM-, UMTS (Universal Mobile Telecommunications System)- und/oder dem LTE (Long-Term Evolution)-Standard des 3rd Generation Partnership Project (3GPP) oder nach dem WIMAX (Worldwide Interoperability for Microwave Access)-Standard ausgestaltet sein kann. Gleichfalls kann das Kommunikationsnetz 101 auch als ein andersartiges drahtloses Netz, beispielsweise ein WLAN (Wireless Local Area Network) ausgeführt sein.

Mit dem Kommunikationsnetz 101 kann eine Vielzahl von Endgeräten 102 verbunden werden, von denen in der Figur 1 eines beispielhaft dargestellt ist, auf das im Folgenden Bezug genommen werden. Die übrigen Endgeräte 102 können in ähnlicher Weise ausgestaltet sein und arbeiten wie das hier dargestellte Endgerät 102.

Das Endgerät 102 beinhaltet ein Funkmodul 103 zur Verbindung mit dem Kommunikationsnetz 101 über das Zugangsnetz. Zur Ausgabe von Informationen und Erfassung von Nutzereingaben ist eine Nutzerschnittstelle vorgesehen, die Ausgabemittel 104 und Eingabemittel 105 beinhaltet. Die Ausgabemittel 104 umfassen vorzugsweise eine Displayeinheit zur visuellen Ausgabe von Informationen sowie eine oder mehrere Lautsprecher zur akustischen Ausgabe von Informationen. Die Eingabemittel 105 können eine Tastatur sowie ein Joystick oder ähnliches Eingabegerät umfassen. Alternativ oder ergänzend kann auch ein Touchscreen als Eingabemittel 105 vorgesehen sein. Zur Steuerung des Endgeräts 102 und zur Ausführung von Anwendungsprogrammen ist ein Hauptprozessor 106 vorgesehen, der mit einem Speicher 107 zur Speicherung der Steuerungs- und Anwendungssoftware sowie von weiteren Daten verbunden ist. Gleichfalls ist der Hauptprozessor mit den übrigen Komponenten des Endgeräts 102 verbunden, um diese zu Steuern und/oder Daten zu erhalten.

In das Endgerät 102 kann eine Identifikationskarte 108 eingesetzt sein, die Daten und Funktionen zur Identifizierung oder Authentifizierung innerhalb eines als Mobilfunknetz ausgestalteten Kommunikationsnetzes 101 enthält bzw. ausführen kann. Die Identifikationskarte 108 ist eine Chipkarte, die einen eigenen Prozessor sowie einen Speicher aufweist, die in der Figur nicht gezeigt sind. Zur Verwendung in einem der zuvor genannten Mobilfunknetze nach einem 3GPP-Standard kann die Identifikationskarte 108 eine SIM (Subscriber Identity Modul)-Karte sein oder ein USIM (Universal Subscriber Identity Modul) enthalten. Zur Bestimmung von QoS-Parametern innerhalb des Endgeräts 102 enthält das Endgerät 102 eine QoS-Einheit 109. Wie in Figur schematisch veranschaulicht, ist die QoS-Einheit 109 ein Softwareprogramm, das auf einem Prozessor des Endgeräts 102 ausgeführt wird. In einer bevorzugten Ausgestaltung ist zur Ausführung der Softwareapplikation der Hauptprozessor 106 des Endgeräts 102 vorgesehen. Grundsätzlich kann die QoS-Einheit 109 jedoch auch in einem anderen vorhandenen Prozessor des Endgeräts 102 ausgeführt werden, beispielsweise in dem Prozessor der Identifikationskarte 108.

Die QoS-Einheit 109 enthält Funktionen zur Messung von QoS-Parametern. Alternativ oder ergänzend erhält die QoS-Einheit QoS-Parameterwerte, die in weiteren Softwareprogrammen und/oder in Hardwareeinheiten des Endgeräts 102 erfasst worden sind, wobei die dortige Erfassung der QoS-Parameter vorzugsweise ebenfalls von der QoS-Einheit 102 gesteuert wird. Die Überwachung bzw. Erfassung von QoS-Parametern kann in vorgegebenen Situationen begonnen werden, beispielsweise beim Einschalten des Endgeräts 102 und/oder beim Start eines bestimmten Dienstes. Nach dem Beginn der Überwachung können QoS-Parameterwerte beispielsweise in vorgegebenen Zeitabständen oder ereignisbasiert erfasst werden.

Die im Endgerät 102 ermittelten QoS-Parameterwerte kann die QoS-Einheit 109 über das Kommunikationsnetz 101 an einen QoS-Server 110 des Netzwerks übermitteln. Zur Übermittlung der QoS-Parameterwerte kann von dem Endgerät 102 eine Nachricht an den QoS-Server 110 über einen Nachrichtendienst gesendet werden, der auch für die Nutzer des Endgeräts 102 zugänglich ist, beispielsweise per SMS. Die entsprechende Nachricht kann von der QoS-Einheit 102 generiert und transparent, d. h. für den Nutzer unsichtbar, abgesendet werden. Gleichfalls können für die Übertragung der QoS-Parameterwerte andere Übertragungsprotokolle eingesetzt werden, wie beispielsweise HTTP sowie speziell für die automatische Datenübertragung vorgesehene Übertragungsprotokolle. Ein Beispiel hierfür ist das von der Open Mobil Alliance (OMA) spezifizierte Protokoll zur Geräteverwaltung Device Management (DM). Die Übertragung von erfassten QoS-Parameterwerten kann von der QoS-Einheit 109 in regelmäßigen vorgegebenen Zeitabständen oder ereignisgesteuert vorgenommen werden.

Die zu erfassenden QoS-Parameter, Bedingungen, unter denen die Überwachung der QoS-Parameter zu erfassen sind, der Erfassungsmodus einschließlich der vorgesehenen Zeitabstände und/oder Ereignisse für die Erfassung, der Übertragungsmodus einschließlich der für die Übertragung vorgesehenen Zeitabstände und/oder der die Übertragung auslösenden Ereignisse sowie ggf. weitere das Verhalten der QoS-Einheit 109 bestimmende Angaben sind in Konfigurationsdaten enthalten, die in dem Endgerät 102, beispielsweise in dem Speicher 107 gespeichert sind. In einer Ausgestaltung kann die Konfigurationsdaten mittels eines Konfigurationsmoduls der QoS-Einheit 109 an dem Endgerät eingesehen und verändert werden.

Alternativ oder ergänzend kann vorgesehen sein, dass die Konfigurationsdaten von dem QoS-Server 110 vorgegeben bzw. verändert werden können. Hierzu kann der QoS-Server 110 entsprechende Konfigurationsnachrichten unter Verwendung eines geeigneten Protokolls über das Kommunikationsnetz 101 an das Endgerät 102 senden, die vorzugsweise transparent zu der QoS-Einheit 109 weitergeleitet werden. Ein Beispiel für ein geeignetes Protokoll ist das zuvor genannte Protokoll der OMA zur Geräteverwaltung.

Durch die Vorgabe der Konfiguration kann der Betreiber des Kommunikationsnetzes 101, unter dessen Kontrolle sich auch der QoS-Server 110 befinden kann, die Erfassung von QoS-Parametern an seine Bedürfnisse bzw. an die Gegebenheiten des Kommunikationsnetzes 102 anpassen, ohne die Endgeräte 102 manuell konfigurieren zu müssen. Beispielsweise kann der Netzbetreiber die QoS-Einheiten 109 der mit dem Kommunikationsnetz 101 verbundenen Endgeräte 102 so konfigurieren, dass QoS-Parameter erfasst werden, die in Beziehung zu bekannten Schwachstellen des Netzes stehen, während eine Erfassung von QoS-Parametern vermieden wird, die in Beziehung zu Diensten stehen, die zuverlässig und problemlos genutzt werden.

Der QoS-Server 110 empfängt vorzugsweise QoS-Parameterwerte, die von einer Vielzahl von Endgeräten 102 gesendet werden, die mit dem Kommunikationsnetz 101 verbunden sind. Die Übermittlung kann bei allen Endgeräten 102 in ähnlicher Weise durchgeführt werden, wie zuvor beschrieben. Darüber hinaus kann der QoS-Server 110 auch gemessene QoS-Parameterwerte erhalten, die an weiteren Messpunkten erfasst worden sind. Derartige Messpunkte können insbesondere Netzwerkknoten bzw. -server sein, die in der Figur nicht dargestellt sind und QoS-Parameter erfassen und die erfassten Werte an den QoS-Server 110 senden. Innerhalb des QoS-Servers 110 kann eine Auswertung der erhaltenen QoS-Parameter durchgeführt werden. Dabei können beispielsweise geringe Dienstgüten identifiziert und analysiert werden. Die Auswertung kann von dem Betreiber des Kommunikationsnetzes 101 etwa zur Optimierung des Kommunikationsnetzes verwendet werden.

Innerhalb des Endgeräts 102 kann grundsätzlich eine Vielzahl von QoS-Parametern erfasst werden. Beispielsweise können einige oder alle der QoS-Parameter bestimmt werden, die in dem ETSI-Dokument TS 102 250, insbesondere in dessen Teil 2 (TS 102 250-2), erläutert sind. Ferner können weitere QoS-Parameterwerte in dem Endgerät 102 erfassbar sein, die dem Fachmann bekannt sind.

In einer Ausgestaltung lassen sich die im Endgerät 102 erfassbaren QoS-Parameter zwei oder mehr Ebenen oder Schichten zuordnen:
Wenigstens eine erste Ebene kann QoS-Parameter umfassen, die sich auf die Datenübertragung über die Schnittstelle zwischen dem Endgerät 102 und dem Kommunikationsnetz 101 beziehen, die im Falle des drahtlosen Kommunikationsnetzes als Luftschnittstelle ausgebildet ist. Diese Parameter können insbesondere die Geschwindigkeit der Datenübertragung und/oder die Signalstärke des drahtlosen Zugangsnetzes umfassen. Beispiele für derartige QoS-Parameter sind die Übertragungsrate, mit der Daten vom Kommunikationsnetz 101 erhalten werden (so genannte Downlink-Datenrate) und an das Kommunikationsnetz 101 gesendet werden können (so genannte Uplink-Datenrate), die Verlustrate für (über eine paketvermittelnde Verbindung) an das Endgerät 102 gesendete Datenpakete (Packet Loss Ratio) sowie die im Endgerät 102 empfangene Signalstärke des Zugangsnetzes und weitere, dem Fachmann bekannte Funkparameter.

Parameter, die als zu einer höheren Schicht gehörig angesehen werden können, stehen in Bezug zu der Ausführung bzw. Bereitstellung von Diensten, auf die der Nutzer des Endgeräts 102 zugreift und die zur Wiedergabe von Informationen an dem Endgerät 102 vorgesehen sind. Derartige QoS-Parameter können ein Maß für die Geschwindigkeit und/oder Qualität sein, mit der auf die Dienste zugegriffen werden kann und/oder Informationen an dem Endgerät 102 ausgegeben werden. Beispielhaft für derartige Parameter sind die Ausgabequalität von Audio- und/oder Bilddatenströmen bei Streaming-Diensten (Streaming Audio Quality bzw. Streaming Video Quality), der zeitliche Versatz zwischen dem Audio- und dem Bildsignal in Videodatenströmen (Streaming Audio/Video De-Synchronization), die Sprachqualität (Telephonie Speech Quality) und die Abbruchrate (Telephonie Cut-off Call Ratio) bei Sprachtelefoniediensten sowie entsprechende Parameter bei Videotelefoniediensten.

Um die Ressourcenauslastung durch QoS-Messungen zu verringern, werden in dem Endgerät 102 im Normalbetrieb nicht alle erfassbaren QoS-Parameter ermittelt. Es ist vorgesehen, dass ein erster QoS-Parameter in bestimmten Situationen überwacht wird. Dem ersten QoS-Parameter sind ein oder mehrere zweite QoS-Parameter zugeordnet, die erfasst werden, wenn (weitere) Bedingungen erfüllt sind. Die weiteren Bedingungen sind in Bezug auf den Wert des ersten QoS-Parameters vorgegeben. Das Vorliegen der Bedingungen wird durch einen Vergleich des Wertes des ersten QoS-Parameters mit einem vorgegebenen Schwellenwert ermittelt und festgestellt, wenn der QoS-Parameterwert den Schwellenwert über- oder unterschritten hat.

Im Folgenden wird zur Bezugnahme auf einen oder mehrere zweite QoS-Parameter die Mehrzahl verwendet. Soweit nicht explizit etwas anderes angegeben wird, wird hiermit auch auf genau einen zweiten QoS-Parameter Bezug genommen, falls dem ersten QoS-Parameter nur ein einziger QoS-Parameter zugeordnet ist.

Der erste QoS-Parameter und die zweiten QoS-Parameter sowie der Schwellenwert und das für die Erfassung der zweiten QoS-Parameter maßgebliche Kriterium (Über- oder Unterschreiten des Schwellenwerts) sind in dem Endgerät 102 als Bestandteile der Konfigurationsdaten der QoS-Einheit 109 hinterlegt. Wie für die übrigen Konfigurationsdaten der QoS-Einheit 109, kann es auch für diese Konfigurationsdaten vorgesehen sein, dass sie von dem QoS-Server 110 angepasst werden können.

Das Über- oder Unterschreiten des Schwellenwerts des ersten QoS-Parameters deutet in einer Ausgestaltung auf eine Verschlechterung des ersten QoS-Parameters hin, die zu Beeinträchtigungen eines oder mehrerer Dienste führen kann oder mit einer solchen Beeinträchtigung einhergeht.

Anhand der zweiten QoS-Parameter kann die Beeinträchtigung in einer Ausgestaltung weiter analysiert werden. Beispielsweise kann bei geeigneter Wahl der zweiten QoS-Parameter eine Ursache für die Beeinträchtigung ermittelt werden. In dieser Ausgestaltung kann es sich bei dem ersten QoS-Parameter um einen QoS-Parameter der oberen Schicht handeln, der sich auf die Ausführung eines bestimmten Dienstes bezieht. Bei dem zweiten zugeordneten Parameter kann es sich um einen Parameter einer unteren Schicht handeln, der sich auf die Datenübertragung zwischen dem Endgerät 102 und dem Kommunikationsnetz 101 bezieht. Hierdurch kann insbesondere ermittelt werden, ob sich eine anhand des ersten QoS-Parameters angezeigte bzw. nahe gelegte Beeinträchtigung bei der Bereitstellung des betreffenden Dienstes auf eine Beeinträchtigung der Datenübertragung zurückführen lässt. Insbesondere kann es sich bei dem ersten QoS-Parameter um die Qualität eines Videostroms handeln und bei dem zweiten QoS-Parameter oder den zweiten QoS-Parametern um einen oder mehrere der die Übertragungsrate, die Paketverlustrate und die Funksignalstärke umfassenden Gruppe von Parametern.

In einer weiteren Ausgestaltung gehören sowohl der erste QoS-Parameter als auch die zugeordneten zweiten QoS-Parameter einer Schicht an und beziehen sich insbesondere entweder beide auf die Bereitstellung von Diensten für den Nutzer oder die Datenübertragung. Auf diese Weise kann etwa geprüft werden, ob eine Beeinträchtigung bei der Bereitstellung eines bestimmten Dienstes zur Wiedergabe von Informationen an dem Endgerät 102, die sich anhand des Über- oder Unterschreitens des Schwellenwerts durch den ersten QoS-Parameter zeigt, mit einer weiteren Beeinträchtigung bei der Bereitstellung desselben oder eines anderen Dienstes einhergeht, die sich in einem anderen QoS-Parameter zeigt, der dem ersten QoS-Parameter zugeordnet ist. So kann beispielsweise vorgesehen sein, dass mit der Erfassung der Qualität Audiostroms eines Videosignals oder der Synchronität zwischen Audio- und Bilddatenstrom begonnen wird, wenn festgestellt wird, dass die Qualität des Bilddatenstroms des Videosignals einen vorgegebenen Schwellenwert unterschritten hat.

Die Erfassung des ersten QoS-Parameters kann beispielsweise begonnen werden, wenn das Endgerät 102 eingeschaltet wird und/oder wenn ein Dienst, auf den sich der erste QoS-Parameter bezieht, gestartet wird. Wenn die QoS-Einheit den Start des Dienstes festgestellt hat, kann die Erfassung des ersten QoS-Parameters vorgenommen werden, oder die QoS-Einheit 109 kann das den Dienst bereitstellende Softwareprogramm des Endgeräts 102 oder ein weiteres Softwareprogramm oder eine Hardwareeinheit dazu instruieren, den ersten QoS-Parameter zu erfassen und die erfassten Werte an die QoS-Einheit 109 zu übermitteln.

Die erfassten Werte des ersten QoS-Parameters können von der QoS-Einheit 109 in der zuvor beschriebenen Weise an den QoS-Server 110 gemeldet werden. Vorzugsweise ist der Schwellenwert jedoch so gewählt, dass die Dienstgüte im Wesentlichen nicht beeinträchtigt ist, solange der erste QoS-Parameter den Schwellenwert nicht über- oder unterschritten hat. Daher kann auf die Übermittlung der erfassten Werte des ersten QoS-Parameters an den QoS-Server 110 verzichtet werden.

Während der Überwachung des ersten QoS-Parameters vergleicht die QoS-Einheit 109 die erfassten Werte des ersten QoS-Parameters mit dem vorgegebenen Schwellenwert, um festzustellen, ob ein Wert den Schwellenwert über- oder unterschreitet. Wenn die QoS-Einheit 109 das Über- oder Unterschreiten des Schwellenwerts festgestellt hat, wird mit der Erfassung der zweiten Parameter begonnen. Die Erfassung wird wiederum entweder von der QoS-Einheit 109 vorgenommen, oder die QoS-Einheit 109 instruiert ein Softwareprogramm eine Hardwareeinheit des Endgeräts 102, die zweiten QoS-Parameter zu erfassen und die erfassten Werte an die QoS-Einheit 109 zu übergeben. Nach dem Beginn der Überwachung des zweiten QoS-Parameters können Werte des QoS-Parameters regelmäßig erfasst werden, alternativ auch ereignisbasiert.

Die erfassten Werte der zweiten Parameter und vorzugsweise die erfassten Werte des ersten QoS-Parameters werden von der QoS-Einheit 109 vorzugsweise an den QoS-Server 110 übermittelt, nachdem das Über- oder Unterschreiten des vorgegebenen Schwellenwerts durch den ersten QoS-Parameter festgestellt worden ist. Auf diese Weise wird der QoS-Server 110 über die Beeinträchtigung der Dienstgüte informiert, die in diesem Fall vorliegt. Die Übermittlung der erfassten QoS-Parameterwerte kann in der beschriebenen Weise beispielsweise in regelmäßigen Zeitanständen vorgenommen werden.

Die Erfassung von Werten der zweiten QoS-Parameter kann solange fortgesetzt werden, wie der erste QoS-Parameter erfasst wird. Dies kann beispielsweise der Fall sein, solange das Endgerät 102 eingeschaltet ist oder der Dienst, auf den sich der erste QoS-Parameter im Endgerät 102 bezieht, ausgeführt wird, bzw. auf den Dienst zugegriffen wird.

Gleichfalls kann vorgesehen sein, dass die Erfassung des zweiten QoS-Parameters in Abhängigkeit von einem Ergebnis eines Vergleichs des ersten QoS-Parameters mit einem Schwellenwert beendet wird. Dabei kann die Erfassung im Falle, dass sie bei Überschreiten eines Schwellenwerts begonnen wird, beendet werden, wenn der erste QoS-Parameter einen Schwellenwert unterschritten hat, und die Erfassung kann im Falle, dass sie bei Unterschreiten eines Schwellenwerts begonnen wird, beendet werden, wenn der erste QoS-Parameter einen Schwellenwert überschritten hat.

Der Schwellenwert, der für die Beendigung der Erfassung der zweiten QoS-Parameter maßgeblich ist, kann dem für den Beginn der Erfassung maßgeblichen Schwellenwert entsprechen. Es kann jedoch auch ein anderer Schwellenwert vorgesehen sein, um eine Hysterese zu erzeugen. Hierzu ist der für die Beendigung maßgeblich Schwellenwert kleiner gewählt als der für den Beginn maßgebliche Schwellenwert, wenn die Erfassung aufgrund eines Überschreitens des maßgeblichen Schwellenwerts begonnen wird, und umgekehrt. Auf diese Weise kann verhindert werden, dass die Erfassung der zweiten QoS-Parameter fortwährend begonnen und beendet wird, wenn der Wert des ersten Parameters, um den Schwellenwert pendelt.

Während in der zuvor beschriebenen Ausgestaltung die Erfassung der zweiten QoS-Parameter in Abhängigkeit von dem eines erste QoS-Parameters begonnen wird, ist in einer weiteren Ausgestaltung vorgesehen, dass mit der Erfassung der zweiten QoS-Parameter begonnen wird, wenn mehrere erste QoS-Parameter jeweils einen zugehörigen vorgegebenen Schwellenwert überschreiten. Auf diese Weise kann die Erfassung des zweiten QoS-Parameters oder der zweiten QoS-Parameter von dem Vorliegen mehrerer Bedingungen abhängig gemacht werden, deren Kombination eine spezifischere Indikation dafür geben können, dass die Erfassung eines oder mehrerer weiterer QoS-Parameter zweckmäßig ist. Beispielsweise kann vorgesehen sein, dass die zuvor genannten, sich auf die Datenübertragung zwischen dem Endgerät 102 und dem Kommunikationsnetz 101 beziehenden QoS-Parameter erfasst werden, wenn sowohl die Qualität eines Bilddatenstroms als auch die Qualität eines zugehörigen Audiodatenstroms jeweils einen vorgegebenen Schwellenwert unterschreiten.

Obwohl die Erfindung in den Zeichnungen und der vorangegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. So kann die Erfindung etwa auch in drahtgebundenen Kommunikationsnetzen und unter Verwendung weiterer oder anderer QoS-Parameter realisiert werden. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Ermitteln einer Dienstgüte wenigstens eines Dienstes, wobei mehrere die Dienstgüte repräsentierende Parameter in einem Kommunikationsendgerät (102) erfasst werden, **dadurch gekennzeichnet, dass** wenigstens einem ersten Parameter aus einer ersten Schicht wenigstens ein zweiter Parameter aus einer zweiten Schicht zugeordnet wird, wobei die erste Schicht einer höheren Schicht zugehörig ist und einen Bezug zur Bereitstellung von Diensten, auf die der Nutzer des Endgeräts (102) zugreift, aufweist, wobei die zweite Schicht einer niedrigeren Schicht zugehörig ist und sich auf die Datenübertragung zwischen dem Endgerät (102) und dem Kommunikationsnetz (101) bezieht, die Erfassung des zweiten Parameters in Abhängigkeit von einem Ergebnis eines Vergleichs des ersten Parameters mit einem vorgegebenen Schwellenwert begonnen wird.

2. Verfahren nach Anspruch 1, wobei der wenigstens erste Parameter ein Maß für die Geschwindigkeit oder Qualität ist, mit der auf die Dienste zugegriffen werden kann oder mit der Informationen an dem Endgerät (102) ausgegeben werden können.

3. Verfahren nach Anspruch 1 oder 2, wobei die Erfassung des zweiten Parameters in Abhängigkeit von einem Ergebnis eines Vergleichs des ersten Parameters mit einem zweiten Schwellenwert beendet wird

4. Verfahren nach Anspruch 1, 2 oder 3, wobei die Erfassung des zweiten Parameters begonnen wird, wenn anhand des Vergleichs festgestellt wird, dass der erste Parameter den Schwellenwert über- oder unterschritten hat.

5. Verfahren nach Anspruch 4, wobei das Über- oder Unterschreiten des Schwellenwerts eine Verschlechterung des ersten Parameters anzeigt.

6. Verfahren nach einem der vorangegangenen Ansprüche, wobei die Erfassung des zweiten Parameters begonnen wird, wenn mehrere erste Parameter jeweils einen Schwellenwert über- oder unterschritten haben.

7. Verfahren nach einem der vorangegangenen Ansprüche, wobei ein zweiter Parameter gewählt ist, der den ersten Parameter potentiell beeinflusst.

8. Verfahren nach einem der vorangegangenen Ansprüche, wobei ein zweiter Parameter gewählt ist, der sich potentiell bei einer Veränderung des ersten Parameters ebenfalls verändert, ohne den ersten Parameter zu beeinflussen.

9. Verfahren nach einem der vorangegangenen Ansprüche, wobei der erste Parameter repräsentativ ist für eine Qualität einer Ausgabe von akustischen und/oder optischen Informationen an dem Kommunikationsendgerät (102).

10. Verfahren nach Anspruch 9, dass der ersten Parameter eine Wiedergabequalität eines Bild- oder Audiodatenstroms angibt.

11. Verfahren nach einem der vorangegangenen Ansprüche, wobei erfasste Werte des ersten und/oder zweiten Parameters von dem Kommunikationsendgerät (102) über das Kommunikationsnetz (101) an einen Netzwerkserver (110) gesendet werden.

12. Computerprogramm umfassend einen Softwarecode mit Befehlen zur Ausführung eines Verfahrens nach einem der vorangegangenen Ansprüche mittels eines Prozessors.

13. Kommunikationsendgerät (102) mit einer Einrichtung (109) zum Erfassen von mehreren eine Dienstgüte repräsentierenden Parametern, **dadurch gekennzeichnet, dass** in dem Endgerät (102) eine Zuordnung zwischen wenigstens einem ersten Parameter aus einer ersten Schicht wenigstens ein zweiter Parameter aus einer zweiten Schicht hinterlegt ist, wobei die erste Schicht einer höheren Schicht zugehörig ist und einen Bezug zur Bereitstellung von Diensten, auf die der Nutzer des Endgeräts (102) zugreift, aufweist, wobei die zweite Schicht einer niedrigeren Schicht zugehörig ist und sich auf die Datenübertragung zwischen dem Endgerät (102) und dem Kommunikationsnetz (101) bezieht, die Einrichtung (109) dazu ausgestaltet ist, die Erfassung des zweiten Parameters in Abhängigkeit von einem Ergebnis eines Vergleichs des ersten Parameters mit einem vorgegebenen Schwellenwert zu starten.

14. Kommunikationsendgerät (102) nach Anspruch 13, das dazu ausgestaltet ist, erfasste Werte des ersten und/oder zweiten Parameters über ein Kommunikationsnetz an ein mit dem Kommunikationsnetz (101) verbundenen Netzwerkserver (110) zu senden.

15. System umfassend ein Kommunikationsendgerät (102) nach Anspruch 14 und einen Netzwerkserver (110), der dazu ausgestaltet ist, die von dem mobilen Endgerät (102) gesendeten Werte zu empfangen.

## Claims

1. A method for determining the quality of at least one service, whereby several parameters that represent the quality of service are detected in a communication terminal device (102), **characterized in that** at least one second parameter from a second layer is associated with at least one first parameter from a first layer, whereby the first layer belongs to a higher layer and relates to the provision of services that the user of the terminal device (102) accesses, whereby the second layer belongs to a lower layer and relates to the data transmission between the terminal device (102) and the communication network (101), and the detection of the second parameter is started as a function of the result of a comparison of the first parameter to a prescribed threshold value.

2. The method according to claim 1, wherein the at least first parameter is a measure of the speed or the quality with which the services can be accessed or with which information can be output at the terminal device (102).

3. The method according to claim 1 or 2, wherein the detection of the second parameter is ended as a function of the result of a comparison of the first parameter to a second threshold value.

4. The method according to claim 1, 2 or 3, wherein the detection of the second parameter is started when, on the basis of the comparison, it is ascertained that the first parameter has exceeded or fallen below the threshold value.

5. The method according to claim 4, wherein exceeding or falling below the threshold value indicates a deterioration of the first parameter.

6. The method according to one of the preceding claims, wherein the detection of the second parameter is started when several first parameters have each exceeded or fallen below a given threshold value.

7. The method according to one of the preceding claims, wherein a second parameter is selected that potentially influences the first parameter.

8. The method according to one of the preceding claims, wherein a second parameter is selected that potentially likewise changes if the first parameter changes, but without influencing the first parameter.

9. The method according to one of the preceding claims, wherein the first parameter is representative of the output quality of acoustic and/or optical information to the communication terminal device (102).

10. The method according to claim 9, wherein the first parameter indicates the reproduction quality of a video data stream or of an audio data stream.

11. The method according to one of the preceding claims, wherein detected values of the first and/or second parameters are sent by the communication terminal device (102) via the communication network (101) to a network server (110).

12. A computer program comprising a software code with commands for executing a method according to one of the preceding claims by means of a processor.

13. A communication terminal device (102) with a means (109) for detecting several parameters that represent the quality of service, **characterized in that** an association between at least one first parameter from a first layer and at least one second parameter from a second layer is stored in the terminal device (102), whereby the first layer belongs to a higher layer and relates to the provision of services that the user of the terminal device (102) accesses, whereby the second layer belongs to a lower layer and relates to the data transmission between the terminal device (102) and the communication network (101), and the means (109) is configured to start the detection of the second parameter as a function of the result of a comparison of the first parameter to a prescribed threshold value.

14. The communication terminal device (102) according to claim 13, which is configured in such a way that detected values of the first and/or second parameters are sent via a communication network to a network server (110) that is connected to the communication network (101).

15. A system comprising a communication terminal device (102) according to claim 14 and a network server (110) that is configured to receive values sent by the mobile terminal device (102).

## Revendications

1. Procédé pour déterminer une qualité de service d'au moiins un service, plusieurs paramètres représentant la qualité de service étant détectés dans un terminal de communication (102), **caractérisé en ce qu'**au moins un deuxième paramètre d'une deuxième couche est associé à au moins un premier paramètre d'une première couche, la première couche faisant partie d'une couche supérieure et ayant un rapport avec la fourniture de services auxquels accède l'utilisateur du terminal (102), la deuxième couche faisant partie d'une couche inférieure et ayant un rapport avec la transmission de données entre le terminal (102) et le réseau de communication (101), la détection du deuxième paramètre commençant en fonction d'un résultat d'une comparaison du premier paramètre avec une valeur seuil donnée.

2. Procédé selon la revendication 1, l'au moins premier paramètre étant une mesure de la vitesse ou de la qualité avec laquelle il est possible d'accéder aux services ou d'émettre des informations au niveau du terminal (102).

3. Procédé selon la revendication 1 ou 2, la détection du deuxième paramètre étant terminée en fonction d'un résultat d'une comparaison du premier paramètre avec une deuxième valeur seuil.

4. Procédé selon la revendication 1, 2 ou 3, la détection du deuxième paramètre commençant s'il est constaté, sur la base de la comparaison, que le premier paramètre a dépassé la valeur seuil par le haut ou par le bas.

5. Procédé selon la revendication 4, le dépassement de la valeur seuil par le haut ou par le bas signalant une dégradation du premier paramètre.

6. Procédé selon l'une des revendications précédentes, la détection du deuxième paramètre commençant lorsque plusieurs premiers paramètres ont chacun dépassé une valeur seuil par le haut ou par le bas.

7. Procédé selon l'une des revendications précédentes, un deuxième paramètre qui influence potentiellement le premier paramètre étant choisi.

8. Procédé selon l'une des revendications précédentes, un deuxième paramètre qui se modifie également potentiellement en cas de modification du premier paramètre sans influencer le premier paramètre étant choisi.

9. Procédé selon l'une des revendications précédentes, le premier paramètre étant représentatif d'une qualité d'une émission d'informations acoustiques et/ou optiques au niveau du terminal de communication (102).

10. Procédé selon la revendication 9, **caractérisé en ce que** le premier paramètre indique une qualité de reproduction d'un flux de données de type image ou audio.

11. Procédé selon l'une des revendications précédentes, des valeurs détectées du premier et/ou du deuxième paramètre étant envoyées du terminal de communication (102) à un serveur de réseau (110) via le réseau de communication (101).

12. Programme informatique comprenant un code logiciel avec des ordres pour l'exécution d'un procédé selon l'une des revendications précédentes au moyen d'un processeur.

13. Terminal de communication (102) comportant un dispositif (109) pour détecter plusieurs paramètres représentant une qualité de service, **caractérisé en ce qu'**est déposée, dans le terminal (102), une association entre au moins un premier paramètre d'une première couche et au moins un deuxième paramètre d'une deuxième couche, la première couche faisant partie d'une couche supérieure et ayant un rapport avec la fourniture de services auxquels accède l'utilisateur du terminal (102), la deuxième couche faisant partie d'une couche inférieure et ayant un rapport avec la transmission de données entre le terminal (102) et le réseau de communication (101), le dispositif (109) étant conçu pour lancer la détection du deuxième paramètre commençant en fonction d'un résultat d'une comparaison du premier paramètre avec une valeur seuil donnée.

14. Terminal de communication (102) selon la revendication 13, conçu pour envoyer des valeurs détectées du premier et/ou du deuxième paramètre à un serveur de réseau (110) relié au réseau de communication (101) via un réseau de communication.

15. Système comprenant un terminal de communication (102) selon la revendication 14 et un serveur de réseau (110) conçu pour recevoir les valeurs émises par le terminal mobile (102).
